# EUROPEAN PATENT APPLICATION

(11) **EP 1 372 133 A1**
(43) Date of publication of application: **17.12.2003**
(21) Application number: 02703916.3
(22) Date of filing: 05.03.2002
(51) Int. Cl.: G09G 3/36, G09G 5/10

(54) **PORTABLE VIDEO DISPLAY DEVICE**

(30) Priority: 19.03.2001 JP 2001079240
(71) Applicant: MATSUSHITA ELECTRIC INDUSTRIAL CO., LTD., Kadoma-shi, Osaka 571-0050 (JP)
(72) Inventor: TANIGUCHI, Shinichi, Yokohama-shi, Kanagawa 236-0042 (JP); KUBOTA, Kosuke, Yokosuka-shi, Kanagawa 239-0828 (JP); IKEDA, Jun, Fukuoka-shi, Fukuoka 814-0001 (JP); HATA, Ryota, Iizuka-shi, Fukuoka 820-0065 (JP); TANAKA, Yasunari, Yokohama-shi, Kanagawa 234-0055 (JP)
(74) Representative: Grünecker, Kinkeldey, Stockmair & Schwanhäusser Anwaltssozietät
(86) International application number: JP0202040
(87) International publication number: WO02075714

(57) **Abstract**

It is one objective of the present invention to provide a portable video display apparatus for which the optimum picture quality can always be provided, without a complicated operation being required and without the load imposed on a CPU being increased by the execution of a program.

According to the present invention, aportable video display apparatus comprises: application program execution means (41) for selectively executing one of multiple application programs mounted in advance; video display means (31) for displaying a picture corresponding to an application program that currently is being executed; image quality adjustment parameter storage means (57) for storing in advance multiple sets of the luminescent luminance, contents to be displayed and an image quality adjustment parameter that is to be set, while correlating the luminescent luminance and the contents with the image quality adjustment parameter; and image quality adjustment means (12) for employing an image quality adjustment parameter that is read, from the image quality adjustment parameter storage means (57), in accordance with the luminescent luminance of the light and the current contents displayed on the video display means (31), to adjust the quality of a picture displayed on the video display means (31).

## Description

### Technical Field

The present invention relates to a portable video display apparatus wherein a camera or a liquid crystal panel is mounted on a portable telephone.

### Background Art

Recently, the communication speeds for digital portable telephone systems have been increased, and as a consequence, a moving picture communication service has been devised and is being deployed in conjunction with the conventional service offered for speech. And while taking the availability of moving picture communication into account, portable telephones are currently being produced on which are mounted cameras, and TFT (Thin Film Transistor) liquid crystal display panels having high response speeds with which clear pictures can be displayed.

On the other hand, the production of such portable telephones has been accompanied with requests that they be reduced in size and weight, and that their power consumption and costs be lowered. But, because of limitations imposed by lens sizes and the materials used for construction, portable telephone cameras, when compared with professional high-performance cameras, do not provide adequate lens brightness (F value), and thus, it is not possible for these cameras to provide the same, satisfactory contrast and coloring as do the professional high-performance cameras. In addition, due to the limited number of pixels available and restrictions imposed by lens performance, high resolution (MTF) cameras like the professional high-performance ones cannot be employed.

As for the TFT liquid crystal display panel, an easily made, compact, reflective liquid crystal display panel having low power consumption tends more often to be employed than a large, because of the inclusion of an inverter, transmission liquid crystal display panel having a fluorescent backlight and a large power consumption. However, compared with the transmission liquid crystal panel having the fluorescent backlight, the reflective liquid crystal display panel can not provide an adequately definitive contrast.

The data displayed on a portable telephone for moving picture communication can be the image of a conversational partner (a so-called picture transmitted by a video phone), a natural picture distributed by a server, a transmission of a homepage provided by using many graphics, and a character mail. To display an image of a conversational partner, the camera employed is smaller than a professional high-performance camera and provides a lower performance. Accordingly, the camera transmits, at a lower video frequency, a picture with poor colors and poor contrast. On the other hand, since a natural picture distributed by a server is one that is obtained using a professional high-performance camera, compared with a picture obtained using the small and low-performance camera provided for a portable telephone, the natural picture, which is transmitted at a high video frequency, has excellent colors and good contrast. Furthermore, a picture such as one for a homepage, provided by using many graphics, has cleaner edges than does the picture of the conversational partner or the natural picture distributed by the server, and while many heavy tones are employed, there are few intermediate ones. In addition, character mail tends to be displayed using only two colors, such as white and black or white and blue.

Once the same picture quality adjustment levels, such as edge enhancement, color gain and contrast, have been fixed for the display of these pictures using a liquid crystal display panel, for none of them can the optimum image quality be attained. And when, for example, edge enhancement, color gain and contrast are adjusted so as to display with optimum quality a natural picture distributed by a server, outlines for the image of a conversational partner will be blurred, and the colors and the contrast will be poor. Further, in this case, for a picture such as a homepage provided by using many graphics, saturating signals double the widths of outlines, colors become garish and white or black spots are generated. On the other hand, when edge enhancement, color gain and contrast are adjusted so that the picture quality of an image displayed for a conversational partner is the optimum, saturating signals double the widths of outlines for a natural picture distributed by a server, colors become garish, and white or black spots are generated. In addition, the quality of a picture that is displayed varies depending on when the liquid crystal display panel is turned on and when it is turned off. That is, when the front light of a reflective liquid crystal display panel is turned on, the displayed picture tends to appear faded. And when the backlight of a semi-transmission liquid crystal display panel is turned on, the colors of the displayed picture tend to be deteriorated. In order to provide a display for which, under each of these conditions, the optimum picture quality can be provided, means for adjusting edge enhancement, color gain and contrast may be provided for a portable telephone, and each time the picture data for the display are changed, operating keys may be used to change the setup.

However, in order to adjust edge enhancement, color gain and contrast for a portable telephone, a complicated operation must be performed using a small number of operating keys, and it is exasperating to have to change the setup each time the contents of a display are altered. To eliminate this irritating requirement, a method is disclosed in JP-A-11-296338 whereby for each type of application identification data such as contrast setup data and brightness setup data are read by a resident monitoring program and are employed to adjust the contrast and the luminance. Since in this instance, however, the processing load imposed on a CPU (Central Processing Unit) is increased by the repetitive execution of the monitoring program, this method is not appropriate for a portable telephone for which real-time processing is required and for which the processing capability of a CPU is less than that available with a personal computer. Further, this method can not cope with the detailed adjustments required for a reflective liquid crystal display panel for which the quality of the picture that is displayed is directly affected by corner illuminance and its corresponding luminance, or for a liquid crystal display panel whereon the optimum image quality can be provided for the display of pictures obtained both by a low-performance camera and by a high-performance camera.

To resolve these shortcomings, it is one objective of the present invention to provide a portable video display apparatus for which the optimum picture quality can always be provided, without a complicated operation being required and without the load imposed on a CPU being increased by the execution of a program.

### Disclosure of the Invention

To achieve this objective, according to a first aspect of the present invention, a portable video display apparatus is characterized by comprising: application program execution means for selectively executing one of multiple application programs mounted in advance; video display means for displaying a picture corresponding to an application program that currently is being executed by the application program execution means; image quality adjustment parameter storage means for storing in advance multiple sets of the luminescent luminance of a light of the video display means, contents displayed on the video display means and an image quality adjustment parameter that is to be set, while correlating the luminescent luminance and the contents with the image quality adjustment parameter; image quality adjustment parameter reading means for reading, from the image quality adjustment parameter storage means, an image quality adjustment parameter that is correlated with the luminescent luminance of the light for the video display means and the current contents displayed on the video display means; and image quality adjustment means for employing the image quality adjustment parameter, read by the image quality adjustment parameter reading means, to adjust the quality of a picture displayed on the video display means.

According to a second aspect of the invention, for the portable video display apparatus of the first aspect, the multiple application programs mounted in advance are stored in memory means.

According to a third aspect of the invention, for the portable video display apparatus of the first aspect, the video display means is a liquid crystal display panel.

According to a fourth aspect of the invention, for the portable video display apparatus of the first aspect, the luminescent luminance of the light of the video display means is determined in accordance with the peripheral light on the display face of the video display means.

According to a fifth aspect of the invention, for the portable video display apparatus of the first aspect, the image quality adjustment parameter includes edge enhancement data, color gain data and contrast data. Further, the image quality adjustment means includes: edge enhancement means for employing the edge enhancement data to perform edge enhancement for a picture displayed on the video display means; color gain adjustment means for employing the color gain data to perform color gain adjustment for a picture displayed on the video display means; and contrast adjustment means for employing the contrast data to perform contrast adjustment for a picture displayed on the video display means.

### Brief Description of the Drawings

Fig. 1 is a specific perspective view of the external appearance of a portable video display apparatus according to a first embodiment of the present invention;
Fig. 2 is a block diagram showing the electric configuration of the essential portion of the portable video display apparatus according to the first embodiment;
Fig. 3 is a diagram showing a front light luminescent luminance table that is stored in the ROM of the portable video display apparatus according to the first embodiment;
Fig. 4 is a diagram showing an image quality adjustment parameter table that is stored in the ROM of the portable video display apparatus according to the first embodiment;
Fig. 5 is a block diagram showing a specific configuration for the image quality adjustment unit of the portable video display apparatus according to the first embodiment;
Fig. 6 is a diagram for explaining the edge enhancement processing performed by the image quality adjustment unit of the portable video display apparatus according to the first embodiment;
Fig. 7 is a diagram for explaining the color gain adjustment processing performed by the image quality adjustment unit of the portable video display apparatus according to the first embodiment;
Fig. 8 is a diagram for explaining the contrast adjustment processing performed by the image quality adjustment unit of the portable video display apparatus according to the first embodiment;
Fig. 9 is a diagram showing the progression of light when the front light is turned on for the reflective liquid crystal panel of the portable video display apparatus according to the first embodiment;
Fig. 10 is a block diagram showing the electric configuration of the essential portion of a portable video display apparatus according to a second embodiment of the present invention;
Fig. 11 is a diagram showing a backlight luminescent luminance table that is stored in the ROM of the portable video display apparatus according to the second embodiment; and
Fig. 12 is a diagram showing the progression of light when the backlight is turned on/off for the semi-transmission liquid crystal display panel of the portable video display apparatus according to the second embodiment of the invention.

In these drawings,
- 12:: image quality adjustment unit
- 31:: reflective liquid crystal display panel
- 41:: CPU
- 42:: photosensor
- 45:: front light
- 50:: ROM
- 51:: built-in program
- 52:: video phone program
- 53:: browser program
- 54:: distributed video reproduction program
- 55:: character mail program
- 56:: front light luminescent luminance table
- 57:: image quality adjustment parameter table
- 121:: edge enhancement unit
- 122:: color gain adjustment unit
- 124:: contrast adjustment unit
- 131:: semi-transmission liquid crystal display panel
- 145:: backlight
- 150:: ROM
- 151:: built-in program
- 152:: video phone program
- 153:: browser program
- 154:: distributed video reproduction program
- 155:: character mail program
- 156:: backlight luminescent luminance table
- 157:: image quality adjustment parameter table

### Best Modes for Carrying Out the Invention

The embodiments of the present invention will now be described in detail while referring to the drawings.

### (First Embodiment)

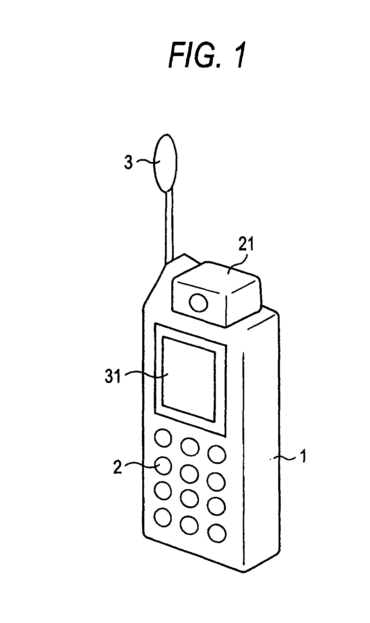

Fig. 1 is a specific perspective view of the external appearance of a portable video display apparatus according to a first embodiment of the present invention. In Fig. 1, a small reflective liquid crystal display panel 31 is provided in the upper portion of the front face of a main body 1 for the portable video display apparatus, and operation keys 2 are provided in the lower portion of the front face. The reflective liquid crystal display panel 31 is used to display the picture of a conversational partner (a so-called picture transmitted by a video phone), a natural picture distributed by a server, a picture such as a homepage provided by using many graphics, and character mail. Provided atop the main body is a compact and light camera 21, which is used to obtain a picture of a user (a so-called picture transmitted by a video phone) and which has an image resolution function that is less efficient than is that of a professional high-performance camera. Finally, a radio communication antenna 3 projects upward from the left end of the top face of the main body 1.

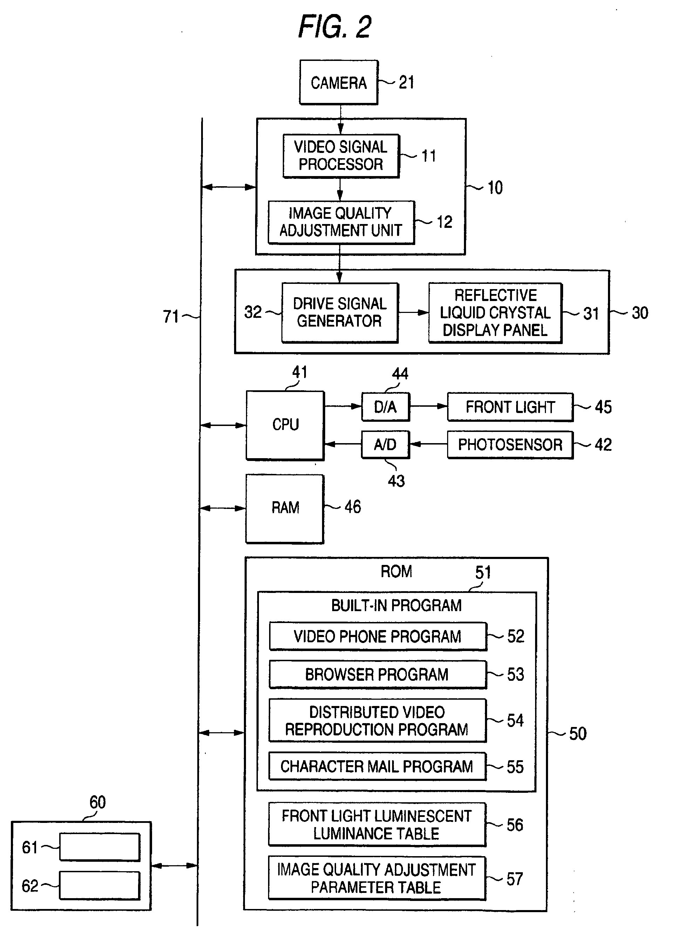

Fig. 2 is a block diagram showing the electric configuration of the essential portion of the portable video display apparatus according to the embodiment. In Fig. 2, a processing/adjustment unit 10, a CPU (Central Processing Unit) 41, a RAM (Random access memory) 46, a ROM (Read Only memory) 50 and an external interface 60 are interconnected by a bus 71. The processing/adjustment unit 10 includes: a video signal processor 11 for performing predetermined processing for an external video signal acquired by the camera 21 (see Fig. 1) or received across the bus 71, and for generating a luminance signal Y1 and color difference signals U1 and V1; and an image quality adjustment unit 12 for, in accordance with an image quality adjustment parameter received across the bus 71 from an image quality adjustment parameter table 57, which will be described later, performing image adjustment processing for the luminance signal Y1 and the color difference signals U1 and V1 generated by the video signal processor 11, and for generating three primary color signals R2, G2 and B2. A liquid crystal display unit 30 includes the reflective liquid crystal display panel 31 (see Fig. 1), and a drive signal generator 32 for driving the reflective liquid crystal display panel 31 based on the three primary signals R2, G2 and B2 transmitted by the image quality adjustment unit 12.

The CPU 41 executes an application program and controls the operations of the individual sections. The photosensor 42, which detects the corner illuminance at the display face of the reflective liquid crystal display panel 31, is connected to an A/D (analog/digital) converter 43 that converts a detection signal, received from the photosensor 42, into a digital signal (detection data) that is transferred to the CPU 41, which is connected to the A/D converter 43, and is then transmitted across the bus 71 to a front light luminescent luminance table 56, which will be described later. The CPU 41 is also connected to a D/A (digital/analog) converter 44 to which it transmits luminescent luminance data received across the bus 71 from the front light luminescent luminance table 56. The D/A converter 44, which converts the received luminescent luminance data into an analog signal (luminescent luminance signal), is connected to a front light 45. The front light 45 is provided for the illumination of the reflective liquid crystal display panel 31, and emits light at a luminance consonant with the luminescent luminance signal transmitted by the D/A converter 44.

The RAM 46 is used for the writing and reading of various data, and stored in the ROM 50, for activating the CPU 41, the front light luminescent luminance table 56 and an image quality adjustment parameter table 57, is a built-in program 51 that includes multiple other application programs, such as a video phone program 52, a browser program 53, a distributed video reproduction program 54 and a character mail program 55. The external interface 60 is used to make a connection with an external device, and includes a radio communication interface 61 and a key interface 62.

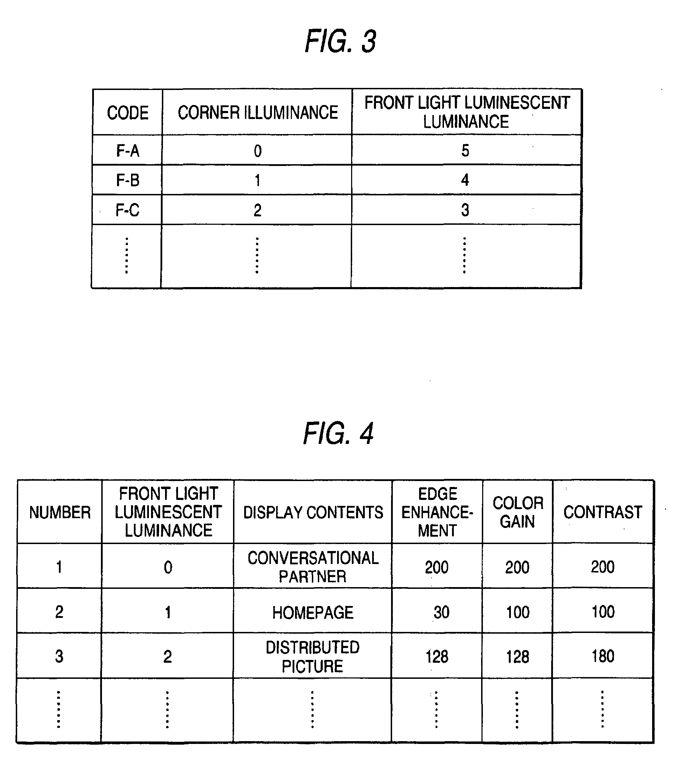

As is shown in Fig. 3, the corner illuminance for the display face of the reflective liquid crystal display panel 31, which is detected by the photosensor 42, is correlated with the luminescent luminance of the front light 45 that should be set up, and multiple pairs of these are stored in the front light luminescent luminance table 56 of the ROM 50. Allocated for each of these pairs is an alphabetical code, such as F-A, F-B or F-C, that the CPU 41 employs to identify the luminescent luminance of the front light 45 that has been set up.

As is shown in Fig. 4, the luminescent luminance of the front light 45 and the contents that are displayed on the reflective liquid crystal display panel 31 in consonance with the application program are correlated with the image quality parameters (edge enhancement data, color gain data and contrast data) that should be set, and multiple sets of these are stored in the image quality adjustment parameter table 57 of the ROM 50. Allocated for each of the individual sets is a number, such as 1, 2 or 3, that the CPU 41 employs to identify the image quality parameters that have been set.

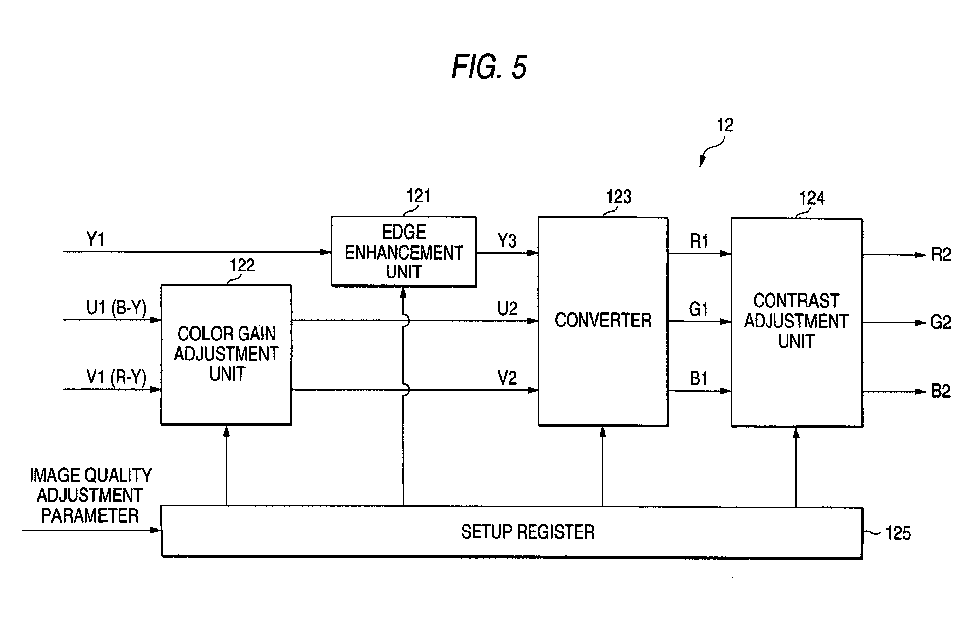

The image quality adjustment unit 12 of the processing/adjustment unit 10 has the specific configuration shown in Fig. 5. In Fig. 5, the image quality adjustment unit 12 includes: an edge enhancement unit 121 for performing the edge enhancement process for the luminance signal Y1 received from the video signal processor 11; a color gain adjustment unit 122 for performing the color gain adjustment process for the color signal U1 (a signal obtained by subtracting a luminance signal from a blue signal) and the color signal V1 (a signal obtained by subtracting a luminance signal from a red signal) that are transmitted by the video signal processor 11; a converter 123 for converting, into the three primary signals R1, G1 and B1, a luminance signal Y3, obtained by the edge enhancement unit 121 through edge enhancement, and color signals U2 and V2, obtained by the color gain adjustment unit 122 through color gain adjustment; and a contrast adjustment unit 124 for performing the contrast adjustment process for the three primary color signals R1, G1 and B1 received from the converter 123. The three primary signals R2, G2 and B2, obtained by the contrast adjustment unit 124 through contrast adjustment, are transmitted to the drive signal generator 32 of the liquid crystal display unit 30. Furthermore, the image quality adjustment unit 12 includes a setup register 125 for holding the image quality adjustment parameters (see Fig. 4) that are extracted from the image quality adjustment parameter table 57 stored in the ROM 50 and that are to be set. The edge enhancement unit 121, the color gain adjustment unit 122, the converter 123 and the contrast adjustment unit 124 are controlled in accordance with the control data held in the setup register 125 and are used to perform the image quality adjustment process.

The operation, in accordance with the embodiment, of the portable video display apparatus that is thus configured will now be described. The CPU 41 is operated in accordance with instructions contained in the built-in program stored in the ROM 50. Upon receiving a request from the external interface 60, which includes the radio communication interface 61 and the key interface 62, the CPU 41 selectively executes one of the multiple application programs (the video phone program 52, the browser program 53, the distributed video reproduction program 54 or the character mail program 55) that are included in the built-ion program 51, and displays on the reflective liquid crystal display panel 31 of the liquid crystal display unit 30 a picture that corresponds to the application program that currently is being executed. At this time, the CPU 41 reads from the image quality adjustment parameter table 57 in the ROM 50 the image quality adjustment parameters that should be set for the luminescent luminance of the front light and the contents currently displayed on the reflective liquid crystal display panel 31. Thereafter, to automatically adjust the quality of the picture displayed on the reflective liquid crystal display panel 31, the CPU 41 transmits the image quality adjustment parameters to the image quality adjustment unit 12 of the processing/adjustment unit 10.

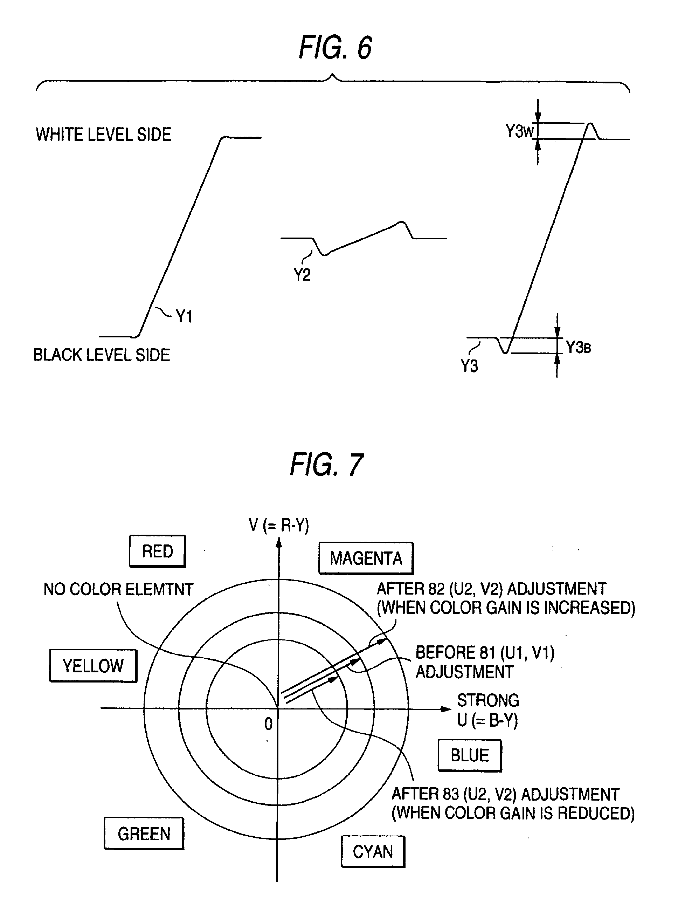

When, upon receiving a request from the external interface 60, the CPU 41 selects the video phone program 52 from among the application programs stored in the ROM 50 and executes it, the picture of a conversational partner that corresponds to this program is displayed on the reflective liquid crystal display panel 31. At this time, since the picture of the conversational partner on the display has been acquired using a low resolution (MTF) camera, the outline of the picture is blurred. Therefore, in accordance with the luminescent luminance of the front light 45 and the contents (the picture of the conversational partner) displayed on the reflective liquid crystal display panel 31, the image quality adjustment parameter for greatly enhancing the picture edge is read from the image quality adjustment parameter table 57 stored in the ROM 50. In this case, the edge enhancement unit 121 of the image quality adjustment unit 12 performs the edge enhancement processing shown in Fig. 6. That is, when the edge enhancement process is to be performed for the input luminance signal Y1 that is changed from the black level side to the white level side, a high-pass filtering process is performed for the luminance signal Y1 to generate a correction signal Y2, and the correction signal Y2 is added to the luminance signal Y1 to obtain a luminance signal Y3 for providing the enhanced edges. At this time, when the distance Y3_{B}, extending toward the black level side, and the distance Y3_{W}, extending toward the white level side, are further extended by increasing the gain for the high-pass filtering process, a luminance signal having greatly enhanced edges can be obtained, and as a result, a picture having a clear outline can be displayed.

When the CPU 41 executes the video phone program 52, the picture of the conversational partner on the display is acquired by a camera for which the brightness (F value) of the lens is low and the coloring is poor. Therefore, in accordance with the luminescent luminance of the front light 45 and the contents (the picture of the conversational partner) displayed on the reflective liquid crystal display panel 31, the image quality adjustment parameter for increasing the color gain is read from the image quality adjustment parameter table 57. The image quality adjustment parameter is then transmitted to the image quality adjustment unit 12, and the image quality of the video displayed on the reflective liquid crystal display panel 31 is adjusted to increase the color gain. In this case, the color gain adjustment unit 122 of the image quality adjustment unit 12 performs the color gain adjustment process shown in Fig. 7. That is, when the process for increasing the color gain is performed for the input color difference signals U1 and V1 and a color difference vector 81, the color difference signals U2 and V2 and a color difference vector 82 are obtained. As a result, a picture having satisfactory colors can be displayed.

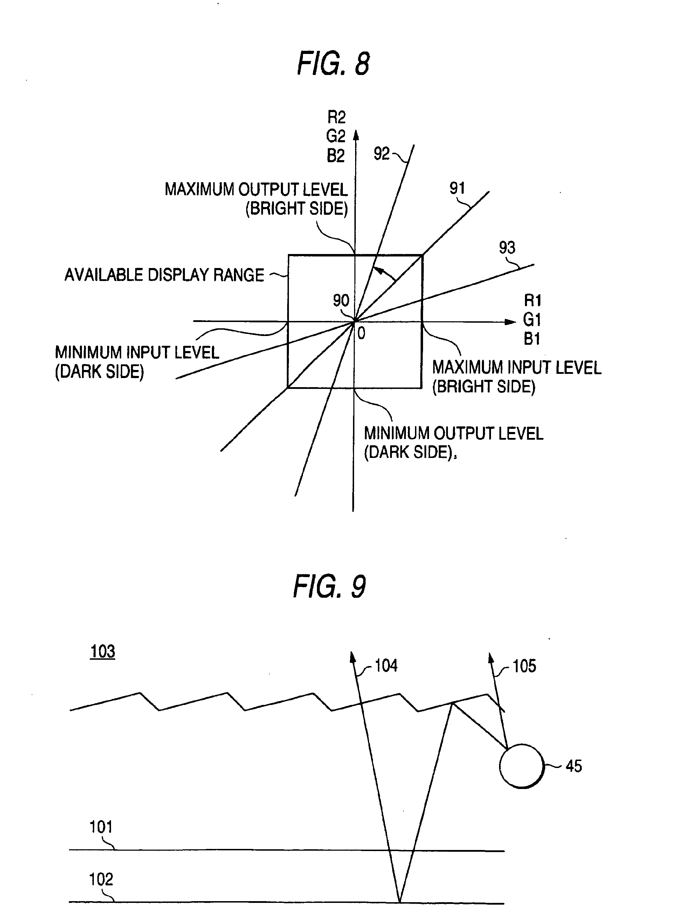

Furthermore, when the CPU 41 executes the video phone program 52, the picture of the conversational partner on the display is acquired by a camera for which both the brightness (F value) of the lens and the contrast are low. Thus, in accordance with the luminescent luminance of the front light 45 and the contents (the picture of the conversational partner) displayed on the reflective liquid crystal display panel 31, the image quality parameter for increasing the contrast is read from the image quality adjustment parameter table 57 stored in the ROM 50. The image quality parameter is then transmitted to the image quality adjustment unit 12, and the quality of the picture displayed on the reflective liquid crystal display panel 31 is adjusted to increase the contrast. In this case, the contrast adjustment unit 124 of the image quality adjustment unit 12 performs the contrast adjustment process as is shown in Fig. 8. That is, when a process for increasing the gain from a center point 90, positioned between the maximum level and the minimum level, is performed for the three primary color signals R1, G1 and B1 (91) that are input, the three primary color signals R2, G2 and B2 (92), for which the contrast is higher, can be obtained. As a result, a clear picture having high contrast can be presented.

When, upon receiving a request from the external interface 60, the CPU 41 selects the distributed video reproduction program 54 from among the application programs stored in the ROM 50 and executes it, a natural picture consonant with this program is displayed on the reflective liquid crystal display panel 31. Since the natural picture to be displayed is acquired by a high-resolution (MTF) camera and the outline is clear, the image quality adjustment parameter for suppressing the enhancement of edges is read from the image quality parameter table 57 stored in the ROM 50, in accordance with the luminescent luminance of the front light 45 and the contents (the natural picture) displayed on the reflective liquid crystal display panel 31. This image quality adjustment parameter is transmitted to the image quality adjustment unit 12, and the quality of the picture displayed on the reflective liquid crystal display panel 31 is adjusted to suppress the enhancement of edges. In this case, as is shown in Fig. 6, when the picture of a conversational partner is displayed, the edge enhancement unit 121 of the image quality unit 12 reduces the gain for a high-pass filtering process that is performed to generate the correction signal Y2, and reduces the distance Y3_{B}, extending toward the black level side, and the distance Y3_{W}, extending toward the white level side. As a result, a luminance signal can be obtained for which edge enhancement is suppressed. Therefore, the presentation of a display for which the outlines are doubled can be prevented.

When the CPU 41 executes the distributed video reproduction program 54, the natural picture to be displayed is acquired by a camera for which the brightness (F value) of the lens is high and the colors are satisfactory, the image quality adjustment parameter for reducing the color gain is read from the image quality adjustment parameter table 57 stored in the ROM 50 in accordance with the luminescent luminance of the front light 45 and the contents (the natural picture) displayed on the reflective liquid crystal display panel 31. The image quality adjustment parameter is then transmitted to the image quality adjustment unit 12, and the quality of the picture displayed on the reflective liquid crystal display panel 31 is adjusted to reduce the color gain. In this case, the color gain adjustment unit 122 of the image quality adjustment unit 12 performs the color gain adjustment process shown in Fig. 7. That is, when the color difference vector 81 obtained from the input color difference signals U1 and V1 is processed to reduce the color gain so it is lower than the gain when the picture of the conversational partner is displayed, by using the color difference signals U2 and V2 a color difference vector 83 can be obtained.

In addition, when the CPU 41 executes the distributed video reproduction program 54, the natural picture to be displayed is obtained by a camera for which both the brightness (F value) of the lens and the contrast are high. Therefore, in accordance with the luminescent luminance of the front light 45 and the contents (the natural picture) displayed on the reflective liquid crystal display panel 31, the image quality adjustment parameter for reducing the contrast is read from the image quality adjustment parameter table 57 stored in the ROM 50. The image quality parameter is then transmitted to the image quality adjustment unit 12, and the quality of the picture displayed on the reflective liquid crystal display panel 31 is adjusted to reduce the contrast. In this case, the contrast adjustment unit 124 of the image quality adjustment unit 12 performs the contrast adjustment process shown in Fig. 8. That is, the three primary color signals R1, G1 and B1 (91) that are input are processed, so that the gain from the center point 90, positioned between the maximum level and the minimum level, is reduced compared with the gain when the picture of the conversational partner is displayed. As a result, the three primary color signals R2, G2 and B2 (93) are obtained that have a lower contrast. Therefore, the display of a picture wherein white or black spots occur can be prevented.

When, upon receiving a request from the external interface 60, the CPU 41 selects the browser program 53 from among the application programs stored in the ROM 50 and executes it, a picture, such as a homepage provided by using many graphics, corresponding to this program is displayed on the reflective liquid crystal display panel 31. At this time, since the outline of the picture, such as a home page provided by using many graphics, is clear, the image adjustment parameter for suppressing edge enhancement is read from the image quality adjustment parameter table 57, stored in the ROM 50, in accordance with the luminescent luminance of the front light 45 and the contents (the picture, such as a homepage provided by using many graphics) displayed on the reflective liquid crystal display panel 31. The image quality adjustment parameter is then transmitted to the image quality adjustment unit 12, and the quality of the picture displayed on the reflective liquid crystal display panel 31 is adjusted to suppress the enhancement of edges. In this case, as is shown in Fig. 6, compared with when the picture of the conversational partner or the natural picture distributed by the server is displayed, the edge enhancement unit 121 of the image quality adjustment unit 12 reduces the gain for a high-pass filtering process for generating the correction signal Y2, and reduces the distance Y3_{B}, extending toward the black level side, and the distance Y3_{W}, extending toward the white level side. As a result, a luminance signal for which edge enhancement is suppressed can be obtained. Therefore, the presentation of a picture for which the outlines are doubled can be prevented.

When the CPU 41 executes the browser program 53, the coloring for a picture, such as a homepage provided by using many graphics, is satisfactory. Thus, from the image quality adjustment parameter table 57 stored in the ROM 50, the image quality adjustment parameter for reducing color gain is read in accordance with the luminescent luminance of the front light 45 and the contents (a picture such as a homepage provided by using many graphics) displayed on the reflective liquid crystal display panel 31. The image quality adjustment parameter is then transmitted to the image quality adjustment unit 12, and the quality of the picture displayed on the reflective liquid crystal display panel 31 is adjusted to reduce the color gain. In this case, the color gain adjustment unit 122 of the image quality adjustment unit 12 performs the color gain adjustment processs shown in Fig. 7. That is, the color difference vector 81 obtained using input color difference signals U1 and V1 is processed, so that compared with when the picture of the conversational partner and the natural picture distributed by the server are displayed, the color gain is reduced. As a result, the color difference vector 83 is obtained using the color difference signals U2 and V2. Therefore, the presentation of a picture having garish colors can be prevented.

When the CPU 41 executes the browser program 53, the contrast for a picture, such as a homepage provided by using many graphics, is high. Thus, in accordance with the luminescent luminance of the front light 45 and the contents (a picture such as a homepage provided by using many graphics) displayed on the reflective liquid crystal display panel 31, an image quality adjustment parameter for reducing the contrast is read from the image quality adjustment parameter table 57 stored in the ROM 50. The image quality adjustment parameter is then transmitted to the image quality adjustment unit 12, and the quality of the picture displayed on the reflective liquid crystal display panel 31 is adjusted to reduce the contrast. In this case, the contrast adjustment unit 124 of the image quality adjustment unit 12 performs the contrast adjustment process shown in Fig. 8. That is, the three primary color signals R1, G1 and B1 that are input are processed, so that the gain from the center point 90, positioned between the maximum level and the minimum level, is reduced compared with the gain when the picture of the conversational partner or the natural picture distributed by the server is displayed. As a result, the three primary color signals R2, G2 and B2 (93), for which the contrast is low, are obtained. Therefore, the presentation of a picture wherein white or black spots occur can be prevented.

When, upon receiving a request from the external interface 60, the CPU 41 selects the character mail program 55 from among the application programs stored in the ROM 50 and executes it, a character mail picture corresponding to this program is displayed on the reflective liquid crystal display panel 31. At this time, it is desired that the character mail picture (a two-tone picture) that is to be displayed be easily readable, rather than that a condition that produces an unnatural sensation be removed from the picture. Therefore, in accordance with the luminescent luminance of the front light 45 and the contents (a character mail picture) displayed on the reflective liquid crystal display panel 31, an image quality adjustment parameter for preventing the performance of all image quality corrective processes, edge enhancement, color gain adjustment and contrast adjustment, is read from the image quality adjustment parameter table 57 stored in the ROM 50. This image quality adjustment parameter is then transmitted to the image quality adjustment unit 12, and no adjustment is performed of the quality of the picture displayed on the reflective liquid crystal display panel 31 (the adjustment of white balance). In this case, the converter 123 of the image quality adjustment unit 12 converts into the three primary color signals R2, G2 and B2, the luminance signal Y1 and the color difference signals U1 and V1, all of which are received from the video signal processor 11. Then, the CPU 41 selects the colors providing the maximum value and the minimum value and transmits to the drive signal generator 32 the three primary color signals R2, G2 and B2, which serve as the maximum value and the minimum value. As a result, the maximum contrast and coloring can be obtained for the reflective liquid crystal display panel 31, and a picture whose contents are easily read can be provided.

When the front light 45 is turned on for the reflective liquid crystal display panel 31, as is shown in Fig. 9, light emitted by the front light 45 is split into reflected light 104, which passes through a color filter 101 and is reflected by a reflection plate 102, whereafter it again passes through the color filter 101 and is output at a display face 103, and direct light 105, which is output directly from the display face 103 without passing through the color filter 101. When the front light 45 is ON, the contrast for the picture displayed on the display face 103 is low because the reflected light 104 and the direct light 105 are mixed together. Therefore, an image quality adjustment parameter for increasing the contrast is transmitted to the image quality adjustment unit 12, and the quality of the picture displayed on the reflective crystal display panel 31 is adjusted to increase the contrast. In this case, the contrast adjustment unit 124 of the image quality adjustment unit 12 performs the contrast adjustment process shown in Fig. 8. That is, the three primary color signals R1, G1 and B1 (91) that are input are processed so that the gain from the center point 90, positioned between the maximum level and the minimum level, is increased until it is greater than the gain when the front light 45 is turned off. Therefore, the three primary color signals R2, G2 and B2 (92) that have a higher contrast are obtained. As a result, a picture having high contrast and that appears to be less faded can be presented. The image quality adjustment process performed for this embodiment may be employed for hue adjustment or gamma correction.

### (Second Embodiment)

Since the external appearance of a portable video display apparatus according to a second embodiment of the present invention is the same as that for the first embodiment (see Fig. 1), no further explanation for it will be given. As one difference from the first embodiment, a semi-transmission liquid crystal display panel is provided instead of the reflective liquid crystal display panel 31.

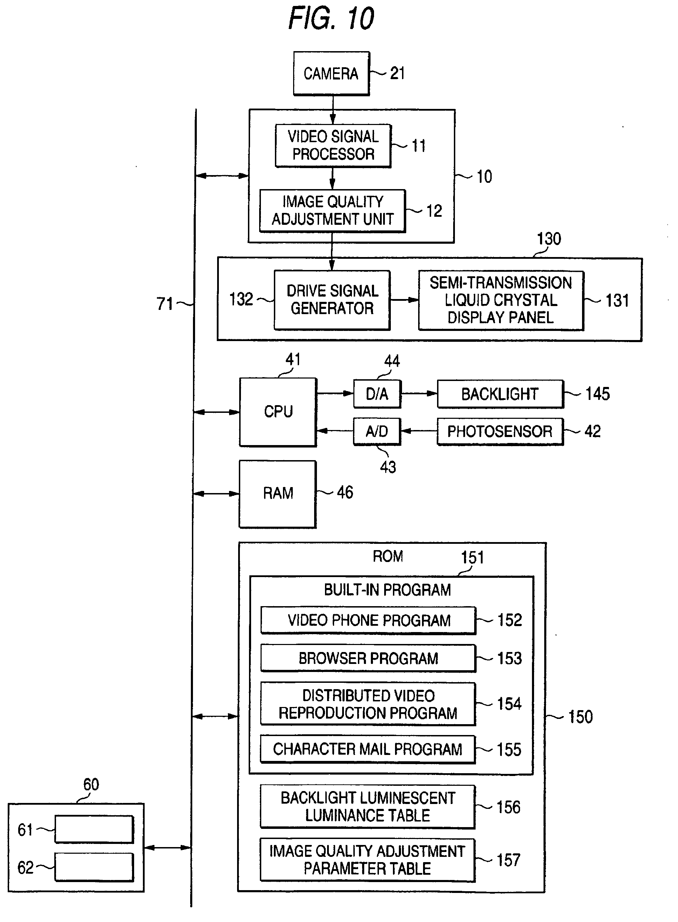

Fig. 10 is a block diagram showing the electric configuration of the essential portion of a portable video display apparatus according to the embodiment. In Fig. 10, a liquid crystal display unit 130 includes a semi-transmission liquid crystal display panel 131 and a drive signal generator 132 that employ the three primary color signals R1, G1 and B1, received from the image quality adjustment unit 12, to generate a drive signal for driving the semi-transmission liquid crystal display panel 131. A CPU 41 is connected to a D/A (digital/analog) converter 44, and luminescent luminance data obtained from a backlight luminescent luminance table 156 is transmitted across a bus 71 and through the CPU 41 to the D/A converter 44. The D/A converter 44 is used to convert the received luminescent luminance data into an analog signal (a luminescent luminance signal), and is connected to a backlight 145. The backlight 145 provides illumination for the semi-transmission liquid crystal display panel 131, and emits light at a the luminance that is consonant with the luminescent luminance signal transmitted by the D/A converter 44. Further, a ROM 150 includes a built-in program for activating the CPU 41, a backlight luminescent luminance table 156 and an image quality adjustment parameter table 157. The built-in program 151 includes multiple application programs, such as a video phone program 152, a browser program 153, a distributed video reproduction program 154 and a character mail program 155.

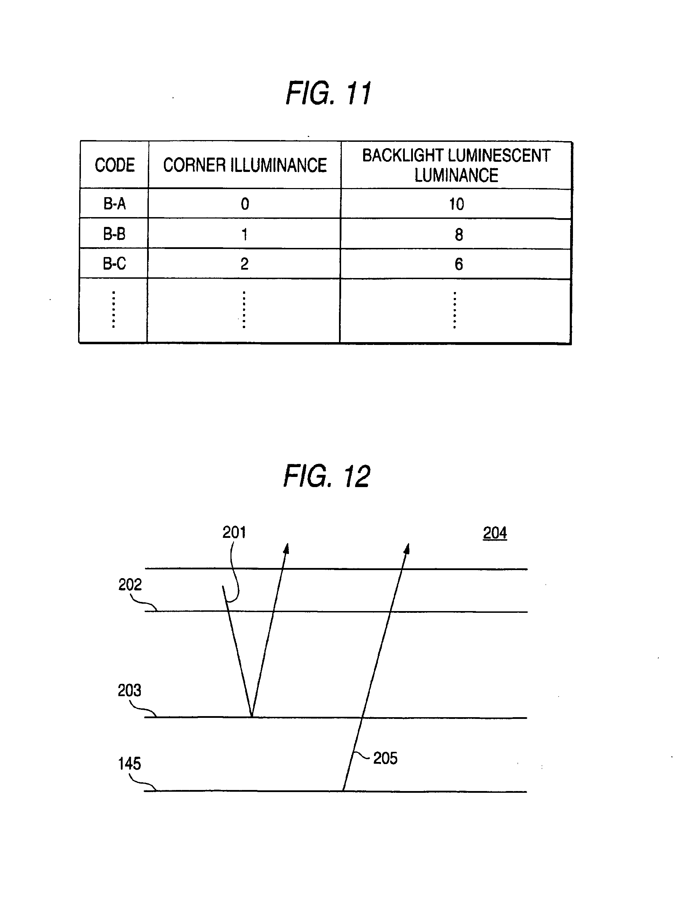

As is shown in Fig. 11, the corner illuminance on the display face of the semi-transmission liquid crystal display panel 131, which is detected by a photosensor 42, is correlated with the luminescent luminance of the backlight 145 that should be set up, and multiple pairs of these are provided in the backlight luminescent luminance table 156 stored in the ROM 150. Allocated for each of these pairs is an alphabetical code, such as B-A, B-B or B-C, that the CPU 41 uses to identify the luminescent luminance of the backlight 145 that has been set up.

Since the configuration for the other sections in this embodiment is the same as for the first embodiment, no explanation for it will be given. It should be noted that, instead of the luminescent luminance of the front light 45, the luminescent luminance of the backlight 145 and the contents displayed on the semi-transmission liquid crystal display panel 131, which corresponds to the application program, are correlated with the image quality adjustment parameters (edge enhancement data, color gain data and contrast data) that should be set, and multiple sets of them are stored in the image quality adjustment parameter table 157 (see Fig. 4) stored in the ROM 150.

The operation of the thus configured portable video display apparatus for this embodiment will now be described. Since the processing performed when the CPU 41 executes the application programs (the video phone program 152, the browser program 153, the distributed video reproduction program 154 and the character mail program 155) stored in the ROM 150 is the same as that performed for the first embodiment, no further explanation for it will be given.

When the backlight 145 for the semi-transmission liquid crystal display panel 131 is not turned on (is in the OFF state), an operation in the reflection mode is performed, and as is shown in Fig. 12, external light 201 passes through a color filter 202 and is reflected by a reflection plate 203, and the reflected light again passes through the color filter 202 and is output at a display face 204 (the light passes through the color filter 202 twice). When the backlight 145 for the semi-transmission liquid crystal display panel 131 is turned on (is in the ON state), an operation in the backlight mode is performed, and as is shown in Fig. 12, light 205 emitted by the backlight 145 passes through the reflection plate 203 and the color filter 202 and is output at the display face 204 (the light passes through the color filter 202 one time). Specifically, when the luminance in the reflection mode is equal to the luminance in the backlight mode, the color of the picture displayed on the display face 204 in the backlight mode is deteriorated when compared with the reflection mode. Therefore, the image quality adjustment parameter for increasing color gain is transmitted to the image quality adjustment unit 12, and the quality of the picture displayed on the semi-transmission liquid crystal display panel 131 is adjusted to increase the color gain. In this case, a color gain adjustment unit 122 in the image quality adjustment unit 12 performs the color gain adjustment process shown in Fig. 7. That is, a color difference vector 81 obtained using input color difference signals U1 and V1 is processed to increase the color gain compared with the gain when the backlight 145 is turned off. Therefore, a color difference vector 82 is obtained using color difference signals U2 and V2 . As a result, a picture having satisfactory coloring can be presented.

The present invention has been explained in detail by referring to the specific embodiments. However, it would be obvious to one having ordinary skill in the art that the present invention can be variously modified or corrected without departing from the spirit and the scope of the invention.

The present application is based on Japanese Patent Application (No. 2001-079240), filed on March 19, 2001, and the contents of this application are included in this application as a reference.

### Industrial Applicability

As is apparent from this explanation, according to the portable video display apparatus of the invention, the quality of a displayed picture is automatically adjusted in accordance with image quality adjustment parameters that are consonant with the luminance of the illumination of the video display means and the contents currently displayed on the video display means. Therefore, a picture having the optimum quality can be consistently provided, without complicated operations being required. Further, according to the portable video display apparatus of the invention, one of multiple incorporated application programs is selected and executed, and a picture corresponding to the currently executed application program is displayed. Therefore, since it is not necessary for identification data to be provided for each application program and for a monitoring program to be constantly executed, an increase in the load imposed on a CPU, due to the execution of the program, can be prevented.

## Claims

1. A portable video display apparatus comprising:
application program execution means for selectively executing one of multiple application programs mounted in advance;
video display means for displaying a picture corresponding to an application program that currently is being executed by said application program execution means;
image quality adjustment parameter storage means for storing in advance multiple sets of the luminescent luminance of a light of said video display means, contents displayed on said video display means and an image quality adjustment parameter that is to be set, while correlating said luminescent luminance and said contents with said image quality adjustment parameter;
image quality adjustment parameter reading means for reading, from said image quality adjustment parameter storage means, an image quality adjustment parameter that is correlated with said luminescent luminance of said light for said video display means and the current contents displayed on said video display means; and
image quality adjustment means for employing said image quality adjustment parameter, read by said image quality adjustment parameter reading means, to adjust the quality of a picture displayed on said video display means.

2. A portable video display apparatus according to claim 1, wherein said multiple application programs mounted in advance are stored in memory means.

3. A portable video display apparatus according to claim 1, wherein said video display means is a liquid crystal display panel.

4. A portable video display apparatus according to claim 1, wherein said luminescent luminance of said light of said video display means is determined in accordance with the peripheral light on the display face of said video display means.

5. A portable video display apparatus according to claim 1, wherein said image quality adjustment parameter includes edge enhancement data, color gain data and contrast data; and wherein said image quality adjustment means includes
edge enhancement means for employing said edge enhancement data to perform edge enhancement for a picture displayed on said video display means,
color gain adjustment means for employing said color gain data to perform color gain adjustment for a picture displayed on said video display means, and
contrast adjustment means for employing said contrast data to perform contrast adjustment for a picture displayed on said video display means.
